# EUROPÄISCHE PATENTSCHRIFT

(11) **EP 2 477 195 B1**
(45) Veröffentlichungstag und Bekanntmachung des Hinweises auf die Patenterteilung: **13.04.2016**
(21) Anmeldenummer: 12450003.4
(22) Anmeldetag: 13.01.2012
(51) Int. Cl.: H01B 7/40, H01B 7/18, H02G 11/02, H01B 13/22

(54) **Kabeltrommelkabel**
Cable drum cable
Câble à tambour de câble

(30) Priorität: 18.01.2011 AT 692011
(43) Veröffentlichungstag der Anmeldung: 18.07.2012
(73) Patentinhaber: Feller GmbH, 2525 Günselsdorf (AT)
(72) Erfinder: Hammer, Walter, 2601 Sollenau (AT); Renner, Andreas, 2630 Ternitz (AT); Brandstätter, Dietmar, 2753 Markt Piesting (AT)
(74) Vertreter: Gibler & Poth Patentanwälte KG

(56) Entgegenhaltungen:
- EP-A2- 1 378 919
- WO-A1-2004/062054
- DE-A1-102005 057 936
- DE-C1- 19 961 985
- DE-U- 1 765 452
- FR-A1- 2 800 524
- JP-A- 2002 184 248

## Beschreibung

Die Erfindung betrifft ein Kabeltrommelkabel gemäß dem Oberbegriff des Patentanspruches 1.

Es ist bekannt, dass elektrische Kabel, um Platz zu sparen, ein Verheddern des Kabels zu vermeiden und/oder zum Zwecke der einfacheren Handhabung, auf Kabeltrommeln aufgewickelt werden. Bei Vorrichtungen, bei welchen die benötigte Kabellänge eines solchen Kabeltrommelkabels zur Stromversorgung und/oder Datenübertragung häufig variiert, beispielsweise Eingabegeräte für einen Computer oder Haushaltsgeräte, beispielsweise Staubsauger, werden häufig Kabeltrommeln verwendet, welche eine Rückstellvorrichtung aufweisen und das Kabeltrommelkabel wieder selber aufzuwickeln können. Dies kann kontinuierlich geschehen, wodurch das Kabeltrommelkabel auch immer eine gewisse Spannung aufweist, oder durch ein Bedienelement gesteuert werden. Da solche Geräte in der Regel keine Vorrichtungen aufweisen, welche ein geordnetes Aufwickeln des Kabels in Lagen erwirken, sind diese Kabeltrommelkabel eher chaotisch aufgewickelt.

Aus der DE 17 65 452 U ist ein elektrisches Kabel mit einem Außenmantel aus Kunststoff bekannt. Hierbei weist der Außenmantel Vorsprünge auf, welche als Abrieb- bzw. Verschleißschutz fungieren. Diese Vorsprünge können hierbei als Rippen ausgebildet sein, welche in Längsrichtung verlaufen. Zwischen den Rippen sind flache Bereiche ausgebildet. Die Kontur des Außenmantels kann beim Spritzverfahren oder nachträglich per Prägerad ausgebildet werden.

Die FR 2 800 524 A1 offenbart ein Kabel mit zwei Adern, wobei Ausnehmungen in den Außenmantel eingebracht sind um die Biegsamkeit zu erhöhen.

Aus der DE 10 2005 057 936 A1 ist ein auf eine Kabeltrommel aufwickelbares elektrisches Geräteanschlusskabel bekannt.

Aus der DE 199 61 985 C1 ist einen flexiblen Leitungsstrang bekannt, welcher auf eine Leitungstrommel spiralförmig wickelbar ist.

Aus der WO 2004/062054 A1 ist eine Kabeltrommel mit einem Kabeltrommelkabel bekannt, wobei das Kabeltrommelkabel mit Abstandhaltern versehen ist.

Die EP 1 378 919 A2 offenbart ein als Wickelfeder ausgebildetes Flachbandkabel mit elektrischen Leitern und einer Isolierhülle mit rechteckigen Profil, welches spiralförmig aufwickelbar ist.

Aus der JP 2002 184248 A ist ein elektrisches Kabel bekannt, welches eine geringere Reibung mit dem Untergrund verursacht.

Nachteilig ist, dass solche Kabeltrommelkabel eines größeren Kraftaufwandes zum Auf- oder Abwickeln bedürfen, und/oder es gelegentlich zu einer Blockade des Ab- und/oder Aufwickelvorganges kommt. Dabei kann unter Umständen ein weiteres Ab- und/oder Aufwickeln des Kabeltrommelkabels ohne Eingriff von Außen nicht mehr möglich sein. Weiters kann durch die unerwartete Blockade des Ab- und/oder Aufwickelungsvorganges ein Schaden am Gerät selber oder einer externen Installation, beispielsweise die Steckdose an welcher das Kabeltrommelkabel angeschlossen ist, entstehen, da beispielsweise die Benutzer häufig aus Bequemlichkeit das Kabeltrommelkabel nicht manuell abwickeln, sondern das Gerät, beispielsweise ein Staubsauger, hinter sich her ziehen.

Aufgabe der Erfindung ist es daher ein Kabeltrommelkabel der eingangs genannten Art anzugeben, mit welchem die genannten Nachteile vermieden werden können, mit welchem das Wickelverhalten des Kabeltrommelkabels verbessert werden kann.

Erfindungsgemäß wird dies durch die Merkmale des Patentanspruches 1 erreicht. Dadurch ergibt sich der Vorteil, dass das Kabeltrommelkabel mit weniger Kraftaufwand und kontinuierlicher ab- und/oder aufgewickelt werden kann. Weiters wird durch die geringere Adhäsionskraft und der damit verbundenen Haftung zwischen den einzelnen Lagen des Kabeltrommelkabels die Wahrscheinlichkeit einer Blockade des Ab- und/oder Aufwickelvorganges, bzw. einer Verklemmung des Kabeltrommelkabels in der Kabeltrommel verringert. Dadurch wird die Handhabung eines Gerätes, welches dieses Kabeltrommelkabel aufweist, wesentlich vereinfacht. Weiters können durch solche unerwartete Blockaden Schäden am Gerät selber oder an einer externen elektrischen Installationsanordnung, beispielsweise einer Steckdose an welcher das Kabeltrommelkabel angesteckt ist, vermieden werden. Solche beschädigten elektrischen Installationsanordnungen stellen ein hohes Sicherheitsrisiko dar. Außerdem wird vermieden, dass durch das unerwartete ruckartige Anspannen des Kabeltrommelkabels andere Gegenstände in Mitleidenschaft gezogen werden, beispielsweise wenn beim Staubsaugen durch ein unerwartetes ruckartiges Anspannen des Kabeltrommelkabels, welches durch eine Blockade der Kabeltrommel verursacht wurde, eine wertvolle Vase umgeworfen wird. Durch ein einfacheres Ab- und/oder Aufwickeln des Kabeltrommelkabels wird weiters eine mögliche Rückstellvorrichtung der Kabeltrommel geschont, und damit ein längeres ordnungsgemäßes Funktionieren dieser Rückstellvorrichtung sichergestellt. Weiters kann dadurch eine Rückstellvorrichtung eine geringere Rückstellkraft aufweisen, wodurch die Handhabung des Gerätes weiter verbessert wird.

Die Unteransprüche betreffen weitere vorteilhafte Ausgestaltungen der Erfindung. Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform des Kabeltrommelkabels im Querschnitt; und
Fig. 2 das Detail B von Fig. 1 in vergrößerter Darstellung.

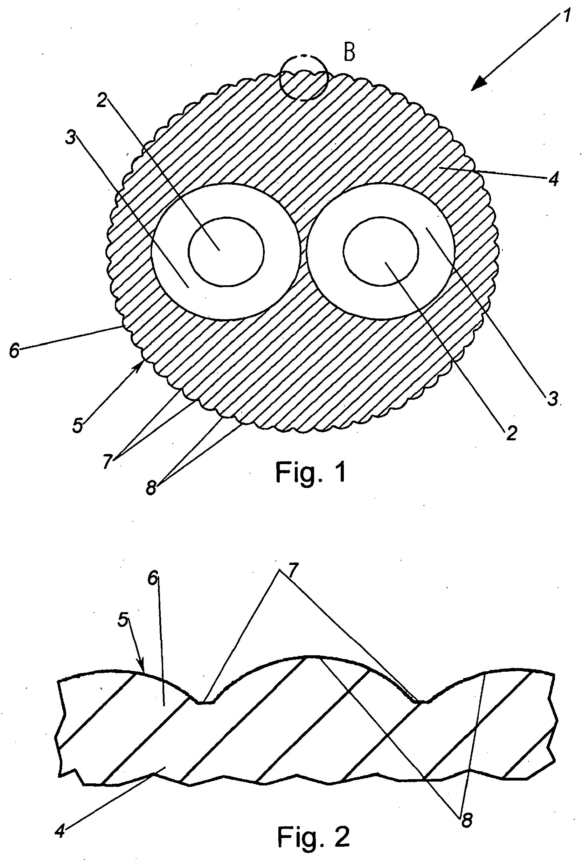

Die Fig. 1 und 2 zeigen ein Kabeltrommelkabel 1 umfassend wenigstens zwei elektrische Leiter 2 mit einer Isolationsschicht 3, wobei die wenigstens zwei elektrischen Leiter 2 in einer Kunststoffummantelung 4 eingebettet sind, wobei eine Außenoberfläche 5 der Kunststoffummantelung 4 zumindest bereichsweise Oberflächenstrukturelemente 6 zur Verbesserung des Wickelverhaltens aufweist. Dadurch ergibt sich der Vorteil, dass das Kabeltrommelkabel 1 mit weniger Kraftaufwand und kontinuierlicher ab- und/oder aufgewickelt werden kann. Weiters wird durch die geringere Adhäsionskraft und der damit verbundenen Haftung zwischen den einzelnen Lagen des Kabeltrommelkabels 1 die Wahrscheinlichkeit einer Blockade des Ab- und/oder Aufwickelvorganges, bzw. einer Verklemmung des Kabeltrommelkabels 1 in der Kabeltrommel verringert. Dadurch wird die Handhabung eines Gerätes, welches dieses Kabeltrommelkabel 1 aufweist, wesentlich vereinfacht. Weiters können durch solche unerwartete Blockaden Schäden am Gerät selber oder an einer externen elektrischen Installationsanordnung, beispielsweise einer Steckdose an welcher das Kabeltrommelkabel 1 angesteckt ist, vermieden werden. Solche beschädigten elektrischen Installationsanordnungen stellen ein hohes Sicherheitsrisiko dar. Außerdem wird vermieden, dass durch das unerwartete ruckartige Anspannen des Kabeltrommelkabels 1 andere Gegenstände in Mitleidenschaft gezogen werden, beispielsweise wenn beim Staubsaugen durch ein unerwartetes ruckartiges Anspannen des Kabeltrommelkabels 1, welches durch eine Blockade der Kabeltrommel verursacht wurde, eine wertvolle Vase umgeworfen wird. Durch ein einfacheres Ab- und/oder Aufwickeln des Kabeltrommelkabels 1 wird weiters eine mögliche Rückstellvorrichtung der Kabeltrommel geschont, und damit ein längeres ordnungsgemäßes Funktionieren dieser Rückstellvorrichtung sichergestellt. Weiters kann dadurch eine Rückstellvorrichtung eine geringere Rückstellkraft aufweisen, wodurch die Handhabung des Gerätes weiter verbessert wird.

Ein Kabeltrommelkabel 1 ist ein elektrisches Kabel, welches dazu vorgesehen ist auf eine Kabeltrommel mehrmals auf- und abgewickelt zu werden. Das Kabeltrommelkabel 1 kann dabei bevorzugt besondere Erfordernisse erfüllen. Das Kabeltrommelkabel 1 besitzt vorzugsweise keinen Memory-Effekt. Dadurch kommt es zu einer verringerten Schleifenbildung. Das Kabeltrommelkabel 1 kann weiters bevorzugt eine Zugfestigkeit aufweisen, welche jene Zugkraftanforderung entspricht, welche durch das komplette Abwickeln, und/oder Ausziehen des Kabeltrommelkabels 1 bis zum Anschlag auftritt. Weiters ist vorzugsweise vorgesehen, dass das Kabeltrommelkabel 1 sehr flexibel ist. Dadurch kann eine lange Lebensdauer einer Verbindung des Kabeltrommelkabels 1 mit einem Stecker erreicht werden.

Das Kabeltrommelkabel 1 umfasst wenigstens zwei elektrische Leiter 2 mit einer Isolationsschicht 3.

Als Material für die elektrischen Leiter 2 können beispielsweise Silber und/oder bevorzugt Kupfer verwendet werden, um eine hohe elektrische Leitfähigkeit bei gleichzeitig hoher Flexibilität zu gewährleisten.

Der elektrische Leiter 2 kann weiters als Einzeldraht oder bevorzugt als Litze ausgebildet sein.

Jeder dieser wenigstens zwei elektrischen Leiter 2 ist mit einer Isolationsschicht 3 umgeben, um einen Kurzschluss zu verhindern. Als Material für die Isolationsschicht 3 werden besonders bevorzugt Kunststoffe verwendet, da Kunststoffe ein gutes Isoliervermögen bei gleichzeitig hoher Flexibilität gewährleisten.

Die wenigstens zwei elektrischen Leiter 2, wobei jeder von einer Isolationsschicht 3 umgeben ist, sind weiters in einer Kunststoffummantelung 4 eingebettet. Diese Kunststoffummantelung 4 bildet aus den wenigstens zwei elektrischen Leitern 2 beispielsweise eine Einheit zu. Weiters bietet diese Kunststoffummantelung 4 diesen wenigstens zwei elektrischen Leitern 2 einen zusätzlichen Schutz

Als Kunststoff für die Kunststoffummantelung 4 wird dabei bevorzugt ein Kunststoff gewählt welcher weich und flexibel ist. Weiters wird bevorzugt ein abriebfester Kunststoff gewählt.

Es hat sich gezeigt, dass das Wickelverhalten des Kabeltrommelkabels 1 stark von den Oberflächeneigenschaften der Außenoberfläche 5 der Kunststoffummantelung 4 abhängt, da die Außenoberfläche der Kunststoffummantelung 4 auch die äußere Grenzfläche des Kabeltrommelkabels 1 darstellt.

Als Oberflächeneigenschaft weisen Kunststoffe einerseits die mechanische Reibung auf, welche durch die mikroskopische mechanische Verzahnung von zwei Oberflächen erzeugt wird und durch die Rauheit der Oberflächen bestimmt wird. Weiters spielt Haftung von einer Kunststoffoberfläche, insbesondere von einem weichen Kunststoff, an einer anderen Oberfläche, durch die Adhäsionskraft der Oberflächenmoleküle des Kunststoffes mit den Oberflächenmolekülen der anderen Oberfläche, eine wichtige Rolle, welche dazu führt, dass eine Kunststoffoberfläche an einer anderen Oberfläche besser haftet und/oder klebt. Die Adhäsionskraft hängt dabei davon ab, wie nahe sich die verschiedenen Oberflächenmoleküle kommen. Dadurch ist die Adhäsionskraft, im Unterschied zur mechanischen Reibung, bei zwei glatten Oberflächen am größen, weil bei zwei glatten Oberflächen die tatsächliche Kontaktfläche, an der welcher sich die beiden Oberflächen berühren, am größten ist. Bei weichen Materialien, wie beispielsweise weicher Kunststoff, wird die tatsächliche Kontaktfläche noch zusätzlich erhöht, weil die Oberfläche eines weichen Materials sich besser an die Form einer anderen Oberfläche anschmiegt.

Während die hohe Adhäsionskraft einer Kunststoffoberfläche bei einigen Anwendungen, wie beispielsweise besserer Grip von Reifen auf Straßen oder kleberfreie selbsthaftende Adhäsionsfolien, vorteilhaft ist, hat eine hohe Adhäsionskraft negative Auswirkungen auf das Wickelverhalten eines Kabeltrommelkabels 1.

Durch die Adhäsionskraft der Außenoberfläche 5 der Kunststoffummantelung 4 des Kabeltrommelkabels 1 haften und/oder kleben die einzelnen Lagen eines aufgewickelten Kabeltrommelkabels 1 aneinander, insbesondere wenn diese Lagen noch stark verpresst sind, was wiederum zu einem höheren Kraftaufwand beim Abwickeln des Kabeltrommelkabels 1 führt. Weiters wird durch die Adhäsionskraft der Außenoberfläche 5 die Gleitfähigkeit des Kabeltrommelkabels 1 herabgesetzt, wodurch beispielsweise beim Aufwickeln eines Kabeltrommelkabels 1 dazu, dass die gerade aufgewickelte Lage des Kabeltrommelkabels 1 nicht an eine Stelle der Kabeltrommel gleitet, an welcher noch sehr wenig Kabel aufgewickelt ist, sondern an jener Lage des aufgewickelten Kabeltrommelkabels 1 haftet, welche die gerade aufgewickelte Lage des Kabeltrommelkabels 1 berührt. Dadurch kommt es zu einem recht losen und chaotischen Wickel eines aufgewickelten Kabeltrommelkabels 1, welcher durch die lockere Wicklung einen erhöhten Platzbedarf hat. Durch diese chaotische und/oder lockere Wicklung kann es wiederum zu einer Blockade des Aufwickelungsvorganges kommen, beispielsweise wenn der Platz in der Kabeltrommel nicht ausreicht, und/oder zu einer Blockade des Abwicklungsvorganges kommen, beispielsweise, wenn die abzuwickelnde Lage durch den chaotischen Wickel von anderen Lagen eingeklemmt wird.

Zur Verbesserung des Wickelverhaltens ist vorgesehen, dass eine Außenoberfläche 5 der Kunststoffummantelung 4 zumindest bereichsweise Oberflächenstrukturelemente 6 zur Verbesserung des Wickelverhaltens aufweist. Diese Oberflächenstrukturelemente 6 sind bevorzugt dazu ausgebildet, die tatsächliche Kontaktfläche der Außenoberfläche 5 der Kunststoffummantelung 4 zu reduzieren.

Diese Oberflächenstrukturelemente 6 können dabei Ausbuchtungen und/oder Einbuchtungen in verschiedenen Formen sein. Beispielsweise können die Ausbuchtungen und/oder Einbuchtungen nadelförmig, linienförmig, wellenförmig und/oder flächenförmig sein, und/oder ein komplexeres Muster wie beispielsweise ein Gittermuster oder ein anderes Muster aufweisen. Dadurch wird die Kontaktfläche der Außenoberfläche 5 mit einer anderen Oberfläche, und damit einhergehend die Adhäsionskraft, verringert, da die Außenoberfläche 5 entweder auf einer Ausbuchtung aufliegt und/oder die Fläche einer Einbuchtung nicht zur Kontaktfläche beiträgt.

Als Beispiel für Oberflächenstrukturelemente 6, welche als linienförmige Einbuchtungen ausgebildet sind, können Rillen genannt werden, welche beispielsweise quer oder parallel zur Längsachse des Kabeltrommelkabels 1, oder spiralenförmig um die Längsachse des Kabeltrommelkabels 1 verlaufen können. Gemäß der ersten besonders bevorzugten Ausführungsform der Erfindung in Fig. 1 und Fig. 2 kann vorgesehen sein, dass die Oberflächenstrukturelemente 6 eine Vielzahl an Längsrillen 7 in Richtung der Längsachse des Kabeltrommelkabels 1 umfassen. Dadurch wird einerseits das Wickelverhalten des Kabeltrommelkabels 1 verbessert, da die Kontaktfläche der Außenoberfläche 5 kleiner ist, andererseits kommt es zu keiner zusätzlichen mechanischen Reibung zwischen Außenoberfläche 5 und Untergrund, wenn das Kabeltrommelkabel 1 entlang der Längsachse des Kabeltrommelkabels 1 über einen Untergrund geschleift wird.

Gemäß der ersten bevorzugten Ausführungsform der Erfindung in Fig. 1 kann vorgesehen sein, dass die Längsrillen 7 über den Umfang der Außenoberfläche 5 im Wesentlichen gleich verteilt sind. Dadurch kommt es zu einer über die Außenoberfläche 5 gleichmäßig verteilten Reduktion der Adhäsionskräfte, weshalb auch die benötigte Kraft zum Abrollen des Kabeltrommelkabels 1 gleichmäßiger ist, wodurch das Wickelverhalten des Kabeltrommelkabels 1 weiter verbessert wird. Das Profil des Querschnittes der Außenoberfläche 5 ist bevorzugt derart ausgebildet, dass die Kontaktfläche der Außenoberflächen 5 von zwei entlang der Längsachse aneinanderliegenden Kabeltrommelkabeln 1 sehr gering ist. Weiniger vorteilhaft erscheint ein sinusförmiges Profil des Querschnittes der Außenoberfläche 5, da in diesem Fall die Außenoberflächen 5 von zwei entlang deren Längsachse anliegenden Kabeltrommelkabeln 1 ineinandergreifen und somit die Kontaktfläche erhöhen können.

Gemäß der ersten bevorzugten Ausführungsform der Erfindung in Fig. 1 kann vorgesehen sein, dass die Längsrillen 7 ein im Wesentlichen V-förmiges Profil aufweisen. Dadurch wird ein Ineinandergreifen der Längsrillen 7 von entlang der Längsachse aneinanderliegenden Kabeltrommelkabeln 1 verhindert, wodurch ein gutes Wickelverhalten erreicht werden kann.

Bevorzugt kann dabei vorgesehen sein, dass die Spitze des im Wesentlichen V-förmigen Profils der Längsrillen 7 abgeflacht ausgebildet ist, wie dies aus Fig. 2 ersichtlich ist. Dadurch wird einerseits die Ablagerung von Schmutz und Dreck in den Längsrillen 7 vorgebeugt, andererseits wird der Gefahr einer Rissbildung, welche bei einer spitz zulaufenden Rille gegeben ist, vorgebeugt, wodurch das Kabeltrommelkabel 1 eine höhere Lebensdauer aufweist.

Die Kontaktfläche der Außenoberfläche 5 des Kabeltrommelkabels 1 mit einer Oberfläche, welche wie diese Außenoberfläche 5 ausgebildet ist, hängt weiters vom Profil der Zwischenbereiche 8 der Längsrillen 7 ab. Die Zwischenbereiche 8 der Längsrillen 7 können beispielsweise trapezförmig ausgebildet sein. Es hat sich allerdings herausgestellt, dass eine konvexe Form des Profils der Zwischenbereiche 8 der Längsrillen 7 vorteilhaft ist, da dadurch die Kontaktfläche von zwei entlang deren Längsachse anliegenden Kabeltrommelkabeln 1 klein ist.

Da das Material der Kunststoffummantelung 4 nachgiebig ist, ist es besonders vorteilhaft, dass jene Bereiche des Profils der Zwischenbereiche 8 der Längsrillen 7, welche dazu vorgesehen sind, dass sich zwei entlang deren Längsachse eng anliegenden Kabeltrommelkabeln 1 dort berühren, eine möglichst hohe konvexe Krümmung aufweisen. Dadurch bleibt die Kontaktfläche der Außenoberfläche 5, auch wenn die beiden Kabeltrommelkabel 1 stark aneinandergepresst werden und sich die Außenoberfläche 5 deswegen verformt, weiter gering.

Gemäß der ersten bevorzugten Ausführungsform der Erfindung in Fig. 1 kann vorgesehen sein, dass zwischen zwei benachbarten Längsrillen 7 Zwischenbereiche 8 mit abgerundetem Profil angeordnet sind. Dadurch wird einerseits ein starker Abrieb dieser Zwischenbereiche 8 verhindert, andererseits wird die mechanische Reibung durch den Verzicht auf Kanten verringert.

Diese Zwischenbereiche 8 mit abgerundetem Profil sind dabei bevorzugt gemäß Fig. 2 nach außen konvex gewölbt.

Bevorzugt kann weiters vorgesehen sein, dass - entlang des Umfangs der Außenoberfläche 5 gesehen - wenigstens 30, insbesondere wenigstens 50 Längsrillen 7 angeordnet sind. Dadurch kann eine optimale Reduktion der Kontaktfläche erreicht werden.

In Weiterbildung der Erfindung kann vorgesehen sein, dass die Tiefe der Längsrillen 7, vom höchsten Punkt des Zwischenbereiches 8 aus gesehen, wenigsten 50 µm, insbesondere wenigstens 100 µm, und besonders bevorzugt wenigstens 200 µm beträgt. Dadurch kann ebenfalls eine optimale Balance zwischen der Verbesserung des Wickelverhaltens und einer ausreichenden minimalen Dicke der Kunststoffummantelung 4 erreicht werden.

Es sind Kabeltrommeln bekannt welche einen um eine Abspulachse drehbar gelagerten Trommelkern aufweisen.

Bevorzugt ist bei so einer Kabeltrommel vorgesehen, dass auf dem Trommelkern ein Kabeltrommelkabel 1, gemäß gegenständlicher Erfindung, angeordnet ist. Dadurch weist diese Kabeltrommel ein verbessertes Wickelungsverhalten.

Bevorzugt kann weiters vorgesehen sein, dass die Kabeltrommel ein elektrisches Anschlusselement zur lagefesten Kontaktierung des Kabeltrommelkabels 1 umfasst. Solche Anschlusselemente können beispielsweise Schleifringe oder Schleifborsten sein. Dadurch ist eine elektrische Kontaktierung des Kabeltrommelkabels 1 durch ein Gerät, in der die Kabeltrommel angeordnet ist, möglich, ohne dass durch einen vorgesehenen Abwickelvorgang und/oder Aufwickelvorgang die elektrische Kontaktierung zwischen Gerät und Kabeltrommelkabel unterbrochen wird. Weiters ist bevorzugt vorgesehen, dass die Drehung des Trommelkerns um die Abspulachse mit einem Federelement wirkverbunden ist. So ein Federelement kann bevorzugt Teil einer Rückstelleinrichtung sein, welche das Kabeltrommelkabel 1 kontinuierlich oder nach Betätigung eines Bedienelementes wieder auf die Kabeltrommel aufwickelt.

Es sind Haushaltsgeräte bekannt, welche Kabeltrommeln aufweisen. Als Beispiele können Staubsauger, Toaster, Mixer oder Bügeleisen genannt werden, welche eine Kabeltrommel zur einfacheren Handhabung aufweisen können. Bei solchen Haushaltsgeräten ist im endmontierten Zustand vorgesehen, dass das Kabeltrommelkabel 1 mehrfach ab- und aufwickelbar ist.

Bevorzugt kann ein Haushaltsgerät mit einer Kabeltrommel, gemäß der gegenständliche Erfindung, vorgesehen sein. Dadurch können die Vorteile des erfindungsgemäßen Kabeltrommelkabels 1 bei diesem Haushaltsgerät erzielt werden.

Es sind Verfahren zur Herstellung von Kabeltrommelkabel 1 bekannt, bei welchen wenigstens zwei elektrische Leiter 2 mit einer Isolationsschicht 3 in einem Extrusionsschritt mit einer Kunststoffummantelung 4 versehen werden. Beispielsweise können Kabeltrommelkabel 1 bei diesem Extrusionsschritt mittels einer Extrusionsmatrize, welche ein Profil der Außenoberflächen 5 beim Extrusionsschritt erzeugt, mit Oberflächenstrukturelementen 6 versehen werden. Zur Herstellung eines Kabeltrommelkabels 1 ist bevorzugt vorgesehen, dass nach dem Extrusionsschritt die Außenoberfläche 5 der Kunststoffummantelung 4 zumindest bereichsweise mit Oberflächenstrukturelementen 6 zur Verbesserung des Wickelverhaltens versehen wird. Dadurch können die Prozessparameter des Extrusionsschrittes unabhängig von der Art des Aufbringens der Oberflächenstrukturelemente 6 gewählt werden.

Besonders bevorzugt ist vorgesehen, dass die Oberflächenstrukturelemente 6 mittels wenigstens einem Prägerad aufgebracht werden. Bei einem Prägerad wird die Außenoberfläche 5 der Kunststoffummantelung 4 an dem strukturierten Umfang des Prägerades vorbeigeführt, wobei unter Druck die Oberflächenstrukturelemente 6 geprägt werden. Insbesondere kann hierbei die Bewegungsrichtung des Kabeltrommelkabels im Wesentlichen normal zu der Drehachse des Prägerades sein. Dadurch können bestehende Produktionsanlagen ohne großen Aufwand umgerüstet werden. Dadurch kann ohne Aufwand und Unterbrechungen die Produktion zwischen herkömmlichen Kabeltrommelkabeln 1 und solchen mit Oberflächenstrukturelementen 6 gewechselt werden. Weiters kann durch die schnelle Auswechselbarkeit von Prägerädern zwischen einer Vielzahl unterschiedlicher und auf den Anwendungszweck abgestimmte Oberflächenstrukturelemente 6 schnell gewechselt werden. Weiter können durch Prägerräder gratfreie Außenoberflächen 5 mit hoher Reproduzierbarkeit erzeugt werden. Bei einer Extrusionsmatrize wird das zu formende Material durch die Aussparung gepresst wird, wobei es zu einer Relativbewegung zwischen der zu formenden Oberfläche und der formenden Oberfläche der Extrusionsmatrize kommt, wodurch in weiterer Folge Grate entstehen, bzw. die Oberfläche rau und ungleichmäßig wird. Im Gegensatz dazu bietet ein Prägerad den Vorteil, dass sich die formgebende Oberfläche des Prägerades durch das Drehen des Prägerades mit der zu formenden Oberfläche mitbewegt, und die Strukturen des Prägerades gegengleich in die zu formende Oberfläche einprägt werden, wodurch die Oberflächenstrukturelemente 6 des Kabeltrommelkabels 1 glatt und gratfrei ausgebildet werden. Weiters bieten Prägerräder im Vergleich zu einer Extrusionsmatrize die Möglichkeit, Oberflächenstrukturelemente 6 mit komplexen Formen aufzutragen.

Besonders bevorzugt ist weiters vorgesehen, dass mehrere versetzt angeordnete Prägeräder verwendet werden. Dadurch können Oberflächenstrukturelemente 6, beispielsweise in der Form von Längsrillen 7, in vorteilhafter Weise über den Umfang der Außenoberfläche im wesentlichen gleich verteilt werden.

Weiters ist besonders bevorzugt vorgesehen, dass als Temperatur der Außenoberfläche 5 bei dem Aufbringen der Oberflächenstrukturelemente 6 wenigstens 100°C, insbesondere 150°C, gewählt wird. Dadurch ist die Außenoberfläche 5 noch weich und kann gut und dauerhaft geformt werden. Weiters können dadurch die Oberflächenstrukturelemente 6 unmittelbar nach dem Extrusionsschritt aufgebracht werden, wodurch das Verfahren kürzer dauert. Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Kabeltrommelkabel (1) umfassend wenigstens zwei elektrische Leiter (2) mit einer Isolationsschicht (3), wobei die wenigstens zwei elektrischen Leiter (2) in einer Kunststoffummantelung (4) eingebettet sind, wobei eine Außenoberfläche (5) der Kunststoffummantelung (4) zumindest bereichsweise Oberflächenstrukturelemente (6) zur Verbesserung des Wickel verhaltens aufweist, wobei die Oberflächenstrukturelemente (6) eine Vielzahl an Längsrillen (7) in Richtung der Längsachse des Kabeltrommelkabels (1) umfassen, wobei die Längsrillen (7) über den Umfang der Außenoberfläche (5) im Wesentlichen gleich verteilt sind, **dadurch gekennzeichnet, dass** die Längsrillen (7) ein im Wesentlichen V-förmiges Profil aufweisen, und dass zwischen zwei benachbarten Längsrillen (7) Zwischenbereiche (8) mit abgerundetem Profil angeordnet sind.

2. Kabeltrommelkabel (1) nach Anspruch 1, **dadurch gekennzeichnet, dass** - entlang des Umfangs der Außenoberfläche (5) gesehen - wenigstens 30 Längsrillen (7) angeordnet sind.

3. Kabeltrommel mit einem um eine Abspulachse drehbar gelagerten Trommelkern, **dadurch gekennzeichnet, dass** auf dem Trommelkern ein Kabeltrommelkabel (1) gemäß Anspruch 1 oder 2 angeordnet ist.

4. Kabeltrommel nach Anspruch 3, **dadurch gekennzeichnet, dass** die Kabeltrommel ein elektrisches Anschlusselement zur lagefesten Kontaktierung des Kabeltrommelkabels (1) umfasst.

5. Kabeltrommel nach Anspruch 3 oder 4, **dadurch gekennzeichnet, dass** die Drehung des Trommelkerns um die Abspulachse mit einem Federelement wirkverbunden ist.

6. Haushaltsgerät mit einer Kabeltrommel nach einem der Ansprüche 3 bis 5.

## Claims

1. A cable drum cable (1), comprising at least two electric conductors (2) with an insulation layer (3), wherein the at least two electric conductors (3) are embedded in a plastic sheathing (4), wherein an outer surface (5) of the plastic sheathing (4) comprises surface structure elements (6) at least in sections for improving the winding behaviour, wherein the surface structure elements (6) comprise a plurality of longitudinal grooves (7) in the direction of the longitudinal axis of the cable drum cable (1), wherein the longitudinal grooves (7) are substantially equally distributed over the circumference of the outer surface (5), **characterized in that** the longitudinal grooves (7) have a substantially V-shaped profile, and intermediate areas (8) with a rounded profile are arranged between two adjacent longitudinal grooves (7).

2. A cable drum cable (1) according to claim 1, **characterized in that** at least 30 longitudinal grooves (7) are arranged, as seen along the circumference of the outer surface (5).

3. A cable drum with a drum core which is rotatably mounted about an unreeling axis, **characterized in that** a cable drum cable (1) according to claim 1 or 2 is arranged on the drum core.

4. A cable drum according to claim 3, **characterized in that** the cable drum comprises an electrical connecting element for making contact in a positionally fixed manner with the cable drum cable (1).

5. A cable drum according to claim 3 or 4, **characterized in that** the rotation of the drum core about the unreeling axis is operatively connected to a spring element.

6. A domestic appliance having a cable drum according to one of the claims 3 to 5.

## Revendications

1. Câble de tambour de câble (1) comprenant au moins deux conducteurs électriques (2) avec une couche isolante (3), les au moins deux conducteurs électriques (2) étant intégrés dans une gaine en plastique (4), une surface extérieure (5) de la gaine en plastique (4) présentant au moins par zones des éléments de structure de surface (6) destinés à améliorer le comportement d'enroulage, lesquels éléments de structure de surface (6) comprennent plusieurs rainures longitudinales (7) dans le sens de l'axe longitudinal du câble de tambour de câble (1), ces rainures longitudinales (7) étant réparties de façon sensiblement égale sur la circonférence de la surface extérieure (5), **caractérisé en ce que** les rainures longitudinales (7) présentent un profil sensiblement en forme de V et **en ce que** des zones intercalaires (8) ayant un profil arrondi sont disposées entre deux rainures longitudinales (7) voisines.

2. Câble de tambour de câble (1) selon la revendication 1, **caractérisé en ce qu'**au moins 30 rainures longitudinales (7) sont disposées le long de la circonférence de la surface extérieure (5).

3. Tambour de câble avec un centre de tambour supporté avec possibilité de rotation autour d'un axe de déroulage, **caractérisé en ce qu'**un câble de tambour de câble (1) selon la revendication 1 ou 2 est disposé sur le centre de tambour.

4. Tambour de câble selon la revendication 3, **caractérisé en ce que** le tambour de câble comprend un élément de branchement électrique pour la mise en contact stable du câble de tambour de câble (1).

5. Tambour de câble selon la revendication 3 ou 4, **caractérisé en ce que** la rotation du tambour de câble autour de l'axe de déroulage est en liaison active avec un élément de ressort.

6. Appareil ménager muni d'un tambour de câble selon l'une des revendications 3 à 5.
